# FASCICULE DE BREVET EUROPEEN

(11) **EP 3 991 274 B1**
(45) Date de publication et mention de la délivrance du brevet: **14.01.2026**
(21) Numéro de dépôt: 20733466.5
(22) Date de dépôt: 23.06.2020
(51) Int. Cl.: H02K 3/28, H02K 3/12, H02K 3/50

(54) **BOBINAGE ÉLECTRIQUE POUR UNE MACHINE ÉLECTRIQUE TOURNANTE**
ELEKTRISCHE WICKLUNG FÜR EINE ROTIERENDE ELEKTRISCHE MASCHINE
ELECTRICAL WINDING FOR A ROTATING ELECTRICAL MACHINE

(30) Priorité: 27.06.2019 FR 1907066
(43) Date de publication de la demande: 04.05.2022
(73) Titulaire: Valeo Electrification, 95800 Cergy (FR)
(72) Inventeur: GROSPEAUD, Maxime, 94046 CRETEIL CEDEX (FR); SCHMITT, Alexandre, 94046 CRETEIL CEDEX (FR); BERNARD, Clément, 94046 CRETEIL CEDEX (FR); GAUTRU, Jean-François, 94046 CRETEIL CEDEX (FR); MANDOK, Wojciech, 43500 Czechowice (PL); DE CLERCQ, Stéphane, 94046 CRETEIL CEDEX (FR); PICARD, Cyril, 94046 CRETEIL CEDEX (FR)
(74) Mandataire: Valeo Powertrain Systems
(86) Numéro de dépôt international: PCT/EP2020/067459
(87) Numéro de publication internationale: WO 2020/260259

(56) Documents cités:
- EP-A2- 3 029 810
- WO-A2-2007/146252
- WO-A2-2015/158988
- FR-A1- 2 918 815
- FR-A1- 3 020 521
- FR-A1- 3 075 502
- US-A1- 2005 248 229

## Description

L'invention concerne notamment un bobinage électrique pour une partie active telle qu'un stator ou un rotor de machine électrique tournante. L'invention porte plus particulièrement sur un bobinage électrique réalisé à partir d'épingles conductrices.

L'invention trouve une application particulièrement avantageuse dans le domaine des machines électriques tournantes telles que les alternateurs, les alterno-démarreurs ou encore les machines réversibles ou les moteurs électriques. On rappelle qu'une machine réversible est une machine électrique tournante apte à travailler de manière réversible, d'une part, comme générateur électrique en fonction alternateur et, d'autre part, comme moteur électrique par exemple pour démarrer le moteur thermique du véhicule automobile. Une machine électrique tournante comprend un rotor mobile en rotation autour d'un axe et un stator fixe. Le stator comprend un corps présentant une culasse formant une pièce de révolution autour d'un axe passant par le centre du stator. Le corps comporte des dents s'étendant radialement à partir de la culasse vers le centre du stator et délimitant des encoches autour desquelles est disposé un bobinage électrique. Le bobinage est formé d'une pluralité d'épingles conductrices logées partiellement dans les encoches du corps et raccordées électriquement deux à deux via leurs extrémités pour former un chemin électrique continu. Par exemple, chaque épingle comprend deux segments conducteurs sensiblement parallèles entre eux et reliés par une jonction coudée de manière à former un « U ». Les segments conducteurs sont insérés au niveau d'une première face d'extrémité axiale du stator, dans deux encoches distinctes, de sorte que les segments conducteurs soient sensiblement parallèles à l'axe de révolution du stator. Une même encoche peut loger plusieurs segments appartenant à des épingles distinctes formant ainsi différentes couches de segment conducteur.

Les extrémités libres des segments conducteurs, dépassant d'une seconde face d'extrémité axiale du stator, sont ensuite connectées entre elles de manière à former des chemins électriques générant des champs magnétiques le long des dents du corps lorsqu'ils sont parcourus par un courant électrique. Autrement dit, les épingles conductrices sont reliées deux à deux de sorte à former différents ensembles, chaque ensemble pouvant notamment correspondre à une phase d'alimentation électrique. Par exemple, le stator comporte trois ensembles distincts pour permettre une alimentation en courant triphasé du bobinage.

Un tel bobinage nécessite un certain nombre de connexions notamment entre les épingles d'alimentation formant les entrées et sorties de chaque phase pour connecter les phases entre elles et ainsi assurer le couplage du bobinage souhaité. Ces connexions sont généralement faites au moyen d'un interconnecteur agencées entre les extrémités des épingles d'alimentation. L'interconnecteur est par exemple composé de traces d'interconnexion électriques disposées au-dessus ou sur le côté du bobinage, qui peuvent être surmoulées dans un matériau plastique et qui sont reliées électriquement aux extrémités des épingles de connexion.

Lorsque le couplage souhaité est de type triangle, une sortie d'une phase est connectée à l'entrée de la phase suivante et ainsi de suite jusqu'à ce que toutes les phases du même système de phase soient reliées électriquement à ces deux extrémités. De manière usuelle, chaque phase est enroulée dans les encoches de manière identique. On obtient ainsi, les épingles d'alimentation formant les entrées de phase disposées dans une seule des couches de l'encoche quel que soit la phase et les épingles d'alimentation formant les sorties de phase disposées dans une seule autre des couches de l'encoche quel que soit la phase, lesdites deux couches étant différentes pour les entrées et les sorties. En d'autres terme, toutes les entrées de phase de toutes les phases du système sont alignées suivant une circonférence du stator et toutes les sorties de phase de toutes les phases du système sont alignées suivant une circonférence du stator différente de la circonférence comportant les entrées. Cette disposition des entrées/sorties de phase entraine un croisement entre au moins deux traces de l'interconnecteur afin de réaliser le couplage triangle. La réalisation de l'interconnecteur est alors complexe car il faut permettre le croisement des traces pour réaliser le couplage sans trop augmenter l'encombrement de l'interconnecteur qui a un impact direct sur les dimensions, notamment axiales, du stator et plus généralement de la machine électrique tournante.

La présente invention vise à permettre d'éviter les inconvénients de l'art antérieur. A cet effet, la présente invention a donc pour objet un bobinage électrique pour une partie active, formée notamment d'un stator ou d'un rotor, de machine électrique tournante, la partie active comportant un corps présentant une culasse annulaire autour d'un axe et une pluralité de dents s'étendant à partir d'une face latérale de la culasse dans une direction radiale de manière à délimiter des encoches, lesdites encoches étant ouvertes sur une première face d'extrémité axiale et sur une seconde face d'extrémité axiale du corps. Selon la présente invention, le bobinage électrique présente au moins un système de phases comprenant plusieurs phases électriques chacune comportant un ensemble d'épingles étant reliées électriquement entre elles et présentant chacune au moins un segment conducteur, lesdits segments conducteurs destinés à être logés dans une même encoche forment N couches, ledit ensemble d'épingles comporte une première épingle d'alimentation et une seconde épingle d'alimentation formant chacune une entrée ou une sortie de phase, chaque épingle d'alimentation comporte une extrémité d'alimentation s'étendant à partir du segment conducteur associé à l'extérieur de l'encoche et chaque extrémité d'alimentation qui forme une sortie de phase est reliée électriquement à une autre extrémité d'alimentation qui forme une entrée de phase d'une phase différente pour former un couplage triangle. Toujours selon la présente invention, un premier ensemble, formé d'épingles d'alimentation de différentes phases disposées dans une première couche parmi les N couches, comprend au moins une extrémité d'alimentation formant une entrée de phase et au moins une autre extrémité d'alimentation formant une sortie de phase et en ce qu'un second ensemble, formé d'épingles d'alimentation de différentes phases disposées dans une deuxième couche parmi les N couches différente de ladite première couche, comprend au moins une extrémité d'alimentation formant une entrée de phase et au moins une autre extrémité d'alimentation formant une sortie de phase où, pour une même phase, chaque épingle d'alimentation du premier ensemble est agencée dans une même encoche qu'une épingle d'alimentation du second ensemble.

Grâce à la présente invention, les entrées et sorties de phase à connecter ensemble sont disposées de manière à ce qu'il n'y ait plus de chevauchement ou de croisement de trace d'interconnexion à effectuer pour former le couplage triangle. Ainsi, la structure de l'interconnecteur est simplifiée et l'encombrement de l'interconnecteur est limité. Cela permet de simplifier le schéma de bobinage en limitant l'utilisation d'épingle spéciale.

Selon une réalisation, dans un ensemble comprenant au moins trois premières extrémités, les entrées/sorties de phase sont alternées suivant la circonférence du bobinage. Cette alternance permet d'éviter les croisements entre les traces d'interconnexion tout en évitant qu'une desdites traces dépassent radialement pour réaliser la connexion électrique en évitant une des extrémités disposées sur la même circonférence de stator.

Selon une réalisation, chaque ensemble comprend une extrémité d'alimentation par phase du système de phases. Autrement dit, chaque extrémité d'alimentation d'un même ensemble appartient à une phase différente dudit système de phases.

Selon une réalisation, pour un système de phase comportant un nombre Z de phases électriques, Z étant un nombre entier supérieur ou égal à 3, les épingles d'alimentation sont disposées, le long de la circonférence du stator, dans l'ordre suivant : (a) pour le premier ensemble : l'extrémité d'alimentation formant la sortie de la troisième phase, puis l'extrémité d'alimentation formant l'entrée de la première phase, puis l'extrémité d'alimentation formant la sortie de la deuxième phase et pour le second ensemble : l'extrémité d'alimentation formant l'entrée de la troisième phase, puis l'extrémité d'alimentation formant la sortie de la première phase, puis l'extrémité d'alimentation formant l'entrée de la deuxième phase ; ou (b) pour le premier ensemble : l'extrémité d'alimentation formant la sortie de la seconde phase, puis l'extrémité d'alimentation formant l'entrée de la première phase, puis l'extrémité d'alimentation formant la sortie de la troisième phase et pour le second ensemble : l'extrémité d'alimentation formant l'entrée de la seconde phase, puis l'extrémité d'alimentation formant la sortie de la première phase, puis l'extrémité d'alimentation formant l'entrée de la troisième phase ; ou (c) pour le premier ensemble : l'extrémité d'alimentation formant la sortie de la première phase, puis l'extrémité d'alimentation formant l'entrée de la troisième phase, puis l'extrémité d'alimentation formant la sortie de la deuxième phase et pour le second ensemble : l'extrémité d'alimentation formant l'entrée de la première phase, puis l'extrémité d'alimentation formant la sortie de la troisième phase, puis l'extrémité d'alimentation formant l'entrée de la deuxième phase.

Selon une réalisation, chaque encoche comprend N segments appartenant à des épingles différentes. Par exemple, une couche est formée par un unique segment d'une épingle. Selon une réalisation, les épingles d'alimentation sont disposées dans des couches de bordure. On entend par « couche de bordure », une couche située à une extrémité radiale interne ou externe du bobinage, c'est-à-dire une couche qui n'est pas centrale. Autrement dit, les épingles d'alimentation sont disposées dans des couches formant respectivement la périphérie interne et la périphérie externe du bobinage. En particulier, l'un des ensembles est positionné dans la couche externe et l'autre ensemble est positionné dans la couche interne du bobinage. Cette disposition des épingles d'alimentation dans des couches de bordure par opposition à des couches centrales permet de simplifier les connexions entre les bobines au sein de la phase en permettant de réaliser ces connexions entre des couches centrales qui sont donc adjacentes.

Selon une réalisation, pour un même système de phase, les épingles d'alimentation du premier ensemble présentent une forme différente de celle des épingles d'alimentation du second ensemble. Par exemple, chaque épingle d'alimentation présente un unique segment conducteur et deux extrémités libres. Toujours par exemple, les deux extrémités libres d'une épingle d'alimentation d'un des ensembles s'étendent dans des directions circonférentielles opposées l'une par rapport à l'autre et les deux extrémités libres d'une autre épingle d'alimentation de l'autre ensemble s'étendent dans une même direction circonférentielle. Selon une réalisation, les épingles autres que les épingles d'alimentation sont chacune formée de deux segments conducteurs reliés entre eux à une de leur extrémité s'étendant à partir de la première face d'extrémité axiale du corps, dite première extrémité, et reliés à différentes épingles à l'autre de leur extrémité s'étendant à partir de la seconde face d'extrémité axiale du corps, dite seconde extrémité, les premières extrémités des épingles d'alimentation s'étendant à partir de ladite première face d'extrémité axiale.

Selon cette réalisation, le bobinage comporte un premier groupe d'épingles conductrices dont les segments conducteurs sont, chacun, disposés dans deux couches distinctes et séparées l'une de l'autre par au moins une couche intercalaire, un second groupe d'épingles conductrices dont les segments conducteurs sont, chacun, disposés dans deux couches distinctes et séparées l'une de l'autre par au moins une couche intercalaire, les couches comportant le premier groupe d'épingles étant distinctes des couches comportant le second groupe d'épingles et une épingle de connexion permettant de relier le premier groupe d'épingles au second groupe d'épingles.

Selon une réalisation, les segments conducteurs de l'épingle de connexion sont agencés dans deux couches adjacentes. On entend par « couches adjacentes », des couches successives qui ne sont pas séparées par une autre couche. Cela permet de simplifier l'insertion des épingles lors du procédé de réalisation du bobinage et également de simplifier la forme de l'épingle de connexion.

Selon une réalisation, les couches adjacentes dans lesquelles sont disposés les segments conducteurs de l'épingle de connexion sont des couches centrales. On entend par « couche centrale » une couche qui est entourée par deux autres couches et qui n'est donc pas en bordure de l'encoche.

Selon une réalisation, chaque segment conducteur d'une épingle d'alimentation est destiné à être disposé dans une des encoches comprenant un segment conducteur d'une épingle de connexion.

Selon une réalisation, les épingles d'alimentation permettent de connecter le bobinage à un module électronique de puissance et/ou de commande.

Selon une réalisation, chaque phase comportant une pluralité d'épingles conductrices, au moins une épingle de connexion et un nombre d'épingles d'alimentation égal au double du nombre d'épingle de connexion.

Selon une réalisation, les couches comprenant les segments conducteurs des épingles conductrices du premier groupe d'épingles sont alternées avec les couches comprenant les segments conducteurs des épingles conductrices du second groupe d'épingles. Par exemple, la couche radiale interne comprend un segment conducteur d'une épingle conductrice du premier groupe d'épingles et la couche radiale externe comprend un segment conducteur d'une épingle conductrice du second groupe d'épingles.

Selon une réalisation, les épingles conductrices du premier groupe d'épingles présentent respectivement des formes différentes de celles des épingles conductrices du second groupe d'épingles.

Selon une réalisation, les épingles conductrices du premier groupe d'épingles comprennent chacune deux extrémités libres prolongeant respectivement les deux segments conducteurs, lesdites extrémités étant courbées de manière à se rapprocher l'une de l'autre dans une direction circonférentielle.

Selon une réalisation, les épingles conductrices du second groupe d'épingles comprennent chacune deux extrémités libres prolongeant respectivement les deux segments conducteurs, lesdites extrémités étant courbées de manière à s'écarter l'une de l'autre dans une direction circonférentielle.

La présente invention a également pour objet une partie active de machine électrique tournante, formée notamment d'un stator ou d'un rotor, qui comporte un bobinage électrique tel que précédemment décrit.

De plus, la présente invention a également pour objet une machine électrique tournante comprenant une partie active, formée notamment d'un stator ou d'un rotor, qui comporte un bobinage électrique tel que précédemment décrit. La machine électrique tournante peut, avantageusement, former un alternateur, un alterno-démarreur, une machine réversible ou un moteur électrique.

La présente invention pourra être mieux comprise à la lecture de la description détaillée qui va suivre, d'exemples de mise en œuvre non limitatifs de l'invention et de l'examen des dessins annexés.
La [Fig. 1] représente, schématiquement et partiellement, une vue en coupe d'une machine électrique tournante selon un exemple de mise en œuvre de l'invention.
La [Fig. 2] représente schématiquement une vue en perspective du stator de la figure 1.
La [Fig. 3] représente schématiquement une vue en coupe suivant un plan radial d'une partie du stator de la figure 2.
La [Fig. 4] représente schématiquement une vue en perspective d'une épingle conductrice du premier groupe d'épingles du stator de la figure 2.
La [Fig. 5] représente schématiquement une vue en perspective d'une épingle conductrice du second groupe d'épingles du stator de la figure 2.
La [Fig. 6] représente schématiquement une vue en perspective d'une épingle de connexion du stator de la figure 2.
La [Fig. 7] représente schématiquement une vue en perspective d'une première épingle d'alimentation du stator de la figure 2.
La [Fig. 8] représente schématiquement une vue en perspective d'une seconde épingle d'alimentation du stator de la figure 2.
La [Fig. 9] représente partiellement un schéma électrique du bobinage du stator de la figure 2.
La [Fig. 10] représentent, respectivement et schématiquement, une vue axiale de dessus d'une partie du bobinage comportant des traces d'interconnexion selon un premier mode de réalisation du stator.
La [Fig. 11] représentent, respectivement et schématiquement, une vue axiale de dessus d'une partie du bobinage comportant des traces d'interconnexion selon un deuxième mode de réalisation du stator.
La [Fig. 12] représentent, respectivement et schématiquement, une vue axiale de dessus d'une partie du bobinage comportant des traces d'interconnexion selon un troisième mode de réalisation du stator.

Les éléments identiques ou similaires conservent les mêmes références d'une figure à l'autre. On notera également que les différentes figures ne sont pas nécessairement à la même échelle.

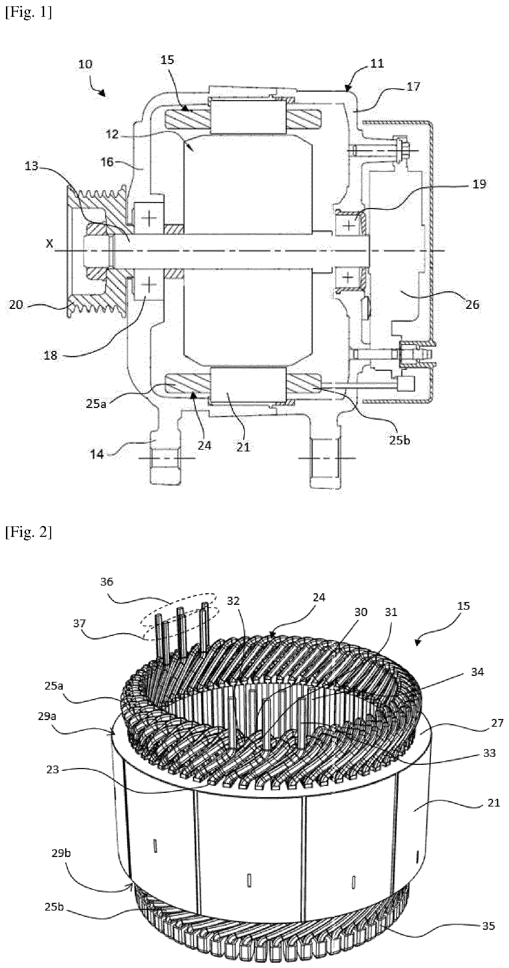

La figure 1 représente un exemple de machine électrique tournante 10 compacte et polyphasée, notamment pour véhicule automobile. Cette machine 10 transforme de l'énergie mécanique en énergie électrique, en mode alternateur, et peut fonctionner en mode moteur pour transformer de l'énergie électrique en énergie mécanique. Cette machine électrique tournante 10 est, par exemple, un alternateur, un alterno-démarreur, une machine réversible ou un moteur électrique.

Dans cet exemple, la machine 10 comporte un carter 11. A l'intérieur de ce carter 11, elle comporte, en outre, un arbre 13, un rotor 12 solidaire en rotation de l'arbre 13 et un stator 15 entourant le rotor 12. Le mouvement de rotation du rotor 12 se fait autour d'un axe X. Dans la suite de la description, la direction axiale correspond à l'axe X, traversant en son centre l'arbre 13, alors que les orientations radiales correspondent à des plans concourants, et notamment perpendiculaires, à l'axe X. Pour les directions radiales, la dénomination interne correspondant à un élément orienté vers l'axe, ou plus proche de l'axe par rapport à un second élément, la dénomination externe désignant un éloignement de l'axe.

Dans cet exemple, le carter 11 comporte un flasque avant 16 et un flasque arrière 17 qui sont assemblés ensemble. Ces flasques 16, 17 sont de forme creuse et portent, chacun, centralement un palier accouplé à un roulement à billes 18, 19 respectif pour permettre la rotation de l'arbre 13. En outre, le carter 11 comporte des moyens de fixation 14 permettant le montage de la machine électrique tournante 10 dans le véhicule.

Un organe d'entraînement 20 tel qu'une poulie ou un pignon peut être fixé sur une extrémité avant de l'arbre 13. Cet organe permet de transmettre le mouvement de rotation à l'arbre ou à l'arbre de transmettre son mouvement de rotation. Dans la suite de la description, les dénominations avant/arrière se réfèrent à cet organe. Ainsi une face avant est une face orientée en direction de l'organe alors qu'une face arrière est une face orientée en direction opposée dudit organe.

Le flasque avant 16 et le flasque arrière 17 sont ici agencés de manière à former une chambre pour la circulation d'un liquide de refroidissement tel que de l'eau ou de l'huile. Alternativement, les flasques pourraient comporter des ouvertures pour le passage d'un flux d'air de refroidissement engendré par la rotation d'au moins un ventilateur solidaire en rotation avec le rotor ou l'arbre.

Dans cet exemple, le rotor 12 est formé d'un paquet de tôles logeant des aimants permanents formant les pôles magnétiques. Alternativement, le rotor pourrait être un rotor à griffe comportant deux roues polaires et une bobine rotorique.

Dans cet exemple de réalisation, le stator 15 comporte un corps 21 formé d'un paquet de tôles doté d'encoches 22, équipées d'isolant d'encoche 23 pour le montage d'un bobinage électrique 24. Le bobinage traverse les encoches du corps 21 et forment un chignon avant 25a et un chignon arrière 25b de part et d'autre du corps du stator. Par ailleurs, le bobinage 24 est formé d'une ou plusieurs phases comportant au moins un conducteur électrique et étant reliées électriquement à un ensemble électronique 26.

L'ensemble électronique 26 qui est ici monté sur le carter 11, comporte au moins un module électronique de puissance permettant de piloter au moins une phase du bobinage 24. Le module de puissance forme un pont redresseur de tension pour transformer la tension alternative générée en une tension continue et inversement. Alternativement, l'ensemble électronique pourrait être déporté de la machine.

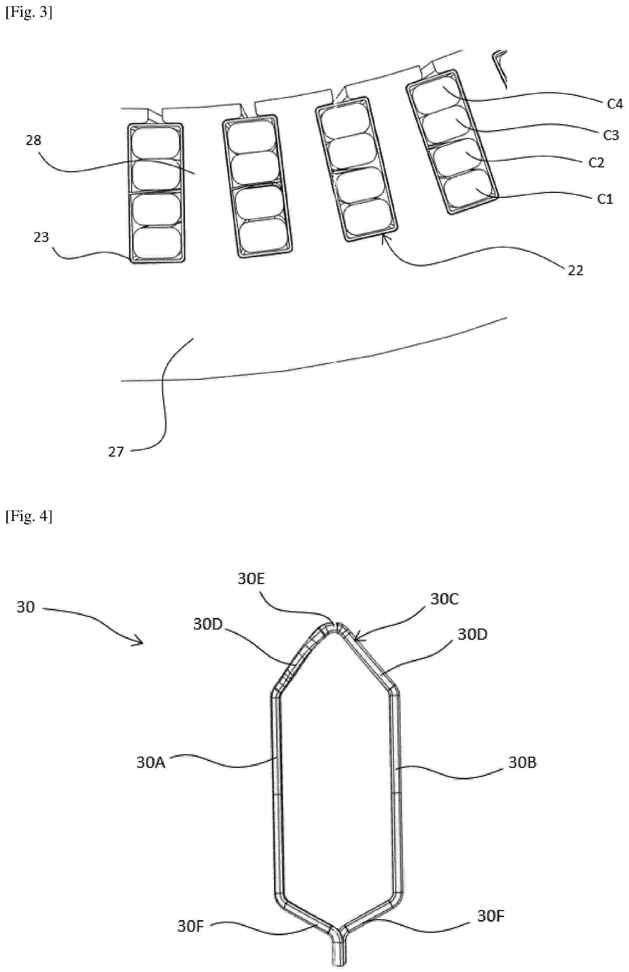

Les figures 2 et 3 représentent plus en détail le stator 15. Le corps du stator 21 est formé d'une culasse 27 de forme annulaire autour de l'axe X et d'une pluralité de dents 28 s'étendant radialement en direction du centre du stator à partir de la culasse, et en particulier ici à partir d'une face latérale formant une paroi interne de la culasse 27. Les dents 28 sont réparties angulairement régulièrement sur le pourtour du corps annulaire, avec des espaces successifs ménagés entre elles de manière à définir les encoches 22 s'étendant en série sur le pourtour du corps annulaire du stator, chaque encoche étant délimitée par deux dents successives. Selon le présent exemple, les dents délimitent 48 encoches réparties le long de la circonférence du corps de stator, ces encoches étant agencées pour former support au bobinage électrique 24. En variante, un nombre différent d'encoches peut être utilisé tel que 96, 84, 72, 60. Il est entendu que ce nombre dépend notamment de l'application de la machine, du diamètre du stator et du nombre de pôles du rotor.

Selon la direction axiale, c'est-à-dire la direction parallèle à l'axe X, les encoches 22 sont ouvertes sur une première face d'extrémité axiale 29a et une seconde face d'extrémité axiale 29b du corps de stator 21. Autrement dit, les encoches traversent axialement de part en part le corps et débouchent sur les deux faces d'extrémité axiales opposées du stator. Par les termes « faces d'extrémité axiales », on entend des faces perpendiculaires ou sensiblement perpendiculaires à l'axe de révolution X du stator.

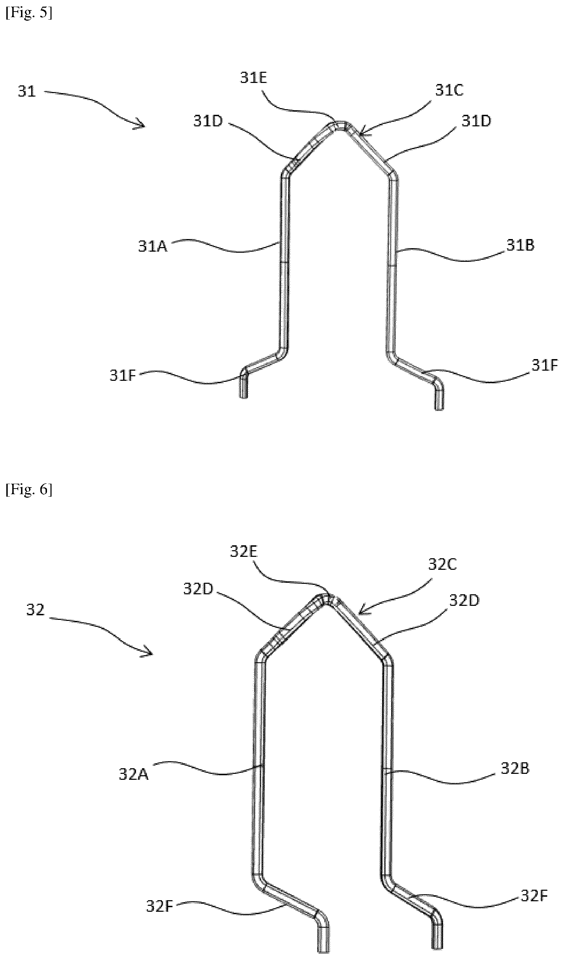

Le bobinage 24 est formé à partir d'une pluralité d'épingles reliées électriquement entre elles pour former des chemins électriques formant les phases du bobinage. Dans cet exemple, chaque phase comprend une pluralité d'épingles conductrices 30, 31, une épingle de connexion 32 et deux épingles d'alimentation 33, 34. Comme cela sera décrit plus en détail après en références aux figures 4 et 5, chaque épingle conductrice 30, 31 est formée de deux segments conducteurs 30A, 30B, 31A, 31B s'étendant axialement dans les encoches 22 et qui sont à cet effet sensiblement parallèle entre eux. Lesdits segments conducteurs sont connectés entre eux par l'intermédiaire d'une jonction coudée 30C, 31C qui est également conductrice de manière à former une continuité électrique. Comme cela sera décrit plus en détail après en références à la figure 6, l'épingle de connexion 32 est formée de deux segments conducteurs 32A, 32B s'étendant axialement dans les encoches 22 et qui sont à cet effet sensiblement parallèle entre eux. Lesdits segments conducteurs sont connectés entre eux par l'intermédiaire d'une jonction coudée 32C qui est également conductrice de manière à former une continuité électrique. Les segments conducteurs 30A, 30B, 31A, 31B, 32A, 32B d'une même épingle 30, 31, 32 sont disposés dans deux encoches distinctes l'une de l'autre.

Chaque jonction coudée 30C, 31C, 32C peut présenter deux portions inclinée 30D, 31D, 32D se rejoignant pour former un sommet 30E, 31 E, 32E. Les jonctions coudées 30C, 31C, 32C sont ici formées de manière monobloc et en particulier sont issues de matière avec les segments conducteurs associés. Ainsi, chaque épingle 30, 31, 32 est formée d'un seul tenant. Alternativement, les jonctions coudées peuvent être formées en deux parties reliées ensemble par exemple par soudure, chaque partie de la jonction coudée étant issue de matière avec le segment conducteur associé. Ainsi, chaque épingle 30, 31, 32 est formée par deux sous-épingles.

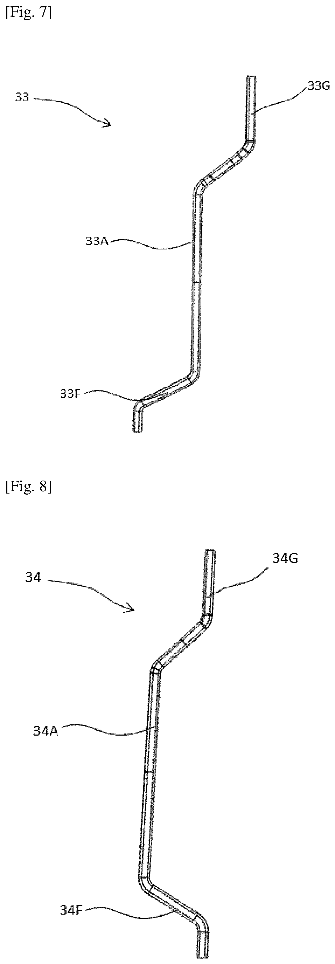

Comme cela sera décrit plus en détail après en références aux figures 7 et 8, les épingles d'alimentation 33, 34 sont chacune formées d'un segment conducteur 33A, 34A s'étendant axialement dans les encoches 22.

Comme visible sur la figure 3, les différents segments conducteurs disposés dans une même encoche sont superposés afin de former un empilement de N couches Ci, étant entendu que ces N couches sont présentes dans chacune des encoches de sorte que l'on forme sur le pourtour du stator des cercles annulaires sensiblement coaxiaux entre eux. Par exemple, ces couches sont au nombre de quatre et numérotées de C1 à C4, selon leur ordre d'empilement dans les encoches 22. La première couche C1 correspond à la couche externe, la deuxième couche C2 correspond à une couche centrale externe directement voisine de la première couche C1, la troisième couche C3 correspond à la couche centrale interne directement voisine de la deuxième couche C2 et la quatrième couche C4 correspond à la couche interne. Les couches C1 et C4 forment des couches de bordure et les couches C2 et C3 forment des couches centrales. La première couche C1 est ainsi occupée par le segment conducteur le plus proche de la culasse 27 et la couche C4 est ainsi occupée par le segment conducteur le plus proche de l'ouverture d'encoche, c'est-à-dire le plus proche de l'axe X. Bien entendu, l'invention ne se limite pas à ce seul mode de réalisation de sorte qu'un nombre supérieur de segments conducteurs peut être empilé dans chaque encoche par exemple 6, 8 ou 10 conducteurs. Par exemple, une couche est formée par un unique segment conducteur. Ainsi, chaque encoche 22 comprend N segments conducteurs alignés radialement les uns par rapport aux autres sur une seule ligne et formant chacun une couche Ci. Dans l'exemple illustré, les segments conducteurs présentent chacun une section sensiblement rectangulaire facilitant leur empilement dans l'encoche.

Les figures 4, 5, 6 et 7 illustrent les différentes formes d'épingles formant le bobinage électrique 24. La description ci-dessous est faite en rapport avec une phase du bobinage électrique, l'homme du métier comprendra que toutes les phases sont formées d'une manière identique. Les épingles conductrices 30, 31 formant les premiers ou les deuxièmes groupes d'épingles se différentient par les extrémités libres 30F, 31F des segments conducteurs, à l'opposé axialement des jonctions coudées 30C, 31C.

La figure 4 représente une épingle conductrice 30 du premier groupe d'épingles, toutes les épingles 30 du premier groupe étant de forme identique. Cette épingle conductrice 30 se caractérise par deux extrémités libres 30F de segments conducteurs qui sont courbées de manière à se rapprocher l'une de l'autre. Plus particulièrement, les extrémités libres 30F des segments conducteurs sont repliées pour venir en recouvrement l'une de l'autre dans une direction radiale. L'écartement entre les deux extrémités libres 30F des segments conducteurs d'une même épingle 30 est plus petit que l'écartement entre ces deux segments conducteurs 30A, 30B dans leur portion droite logée dans les encoches.

La figure 5 représente une épingle conductrice 31 du second groupe d'épingles, toutes les épingles 31 du second groupe étant de forme identique. Cette épingle conductrice 31 se caractérisent par deux extrémités libres 31F de segments conducteurs qui sont courbées de manière à s'écarter l'une de l'autre. L'écartement entre les deux extrémités libres 31F des segments conducteurs d'une même épingle 31 est plus grand que l'écartement entre ces deux segments conducteurs 31A, 31B dans leur portion droite logée dans les encoches.

Plus particulièrement, les segments conducteurs 31A, 31B d'une même épingle sont espacés d'un pas P de manière à être respectivement insérés dans une encoche E et dans une encoche E+P, et les extrémités libres 31F de ces segments conducteurs sont espacées d'un pas 2P.

La figure 6 représente une épingle de connexion 32 qui se caractérisent notamment par deux extrémités libres 32F de segments conducteurs qui sont courbées de manière à conserver le même écartement que celui des segments conducteurs 32A, 32B. L'écartement entre les deux extrémités libres 32F des segments conducteurs d'une même épingle 32 est similaire à l'écartement entre ces deux segments conducteurs 32A, 32B dans leur portion droite logée dans les encoches. Plus particulièrement, les segments conducteurs 32A, 32B d'une même épingle sont espacés d'un pas P de manière à être respectivement insérés dans une encoche E et dans une encoche E+P, et les extrémités libres 32F de ces segments conducteurs sont espacées du même pas P.

La figure 7 représente une première épingle d'alimentation 33 qui comporte un unique segment conducteur 33A, une première extrémité 33G, dite extrémité d'alimentation, et une deuxième extrémité 33F, dite extrémité libre. L'extrémité libre 33F est disposée du même côté du stator que les extrémités libres 30F, 31F, 32F des autres épingles et l'extrémité d'alimentation 33G est disposée du côté opposé axialement, c'est-à-dire du côté des jonctions coudées 30C, 31C, 32C. Les extrémités 33F, 33G sont pliées dans des directions circonférentielles opposées, c'est-à-dire que lesdites extrémités ne sont pas superposées axialement.

La figure 8 représente une seconde épingle d'alimentation 34 qui comporte un unique segment conducteur 34A et une première extrémité 33G, dite extrémité d'alimentation, et une deuxième extrémité 33F, dite extrémité libre. L'extrémité libre 34F est disposée du même côté du stator que les extrémités libres 30F, 31F, 32F des autres épingles et l'extrémité d'alimentation 34G est disposée du côté opposé axialement, c'est-à-dire du côté des jonctions coudées 30C, 31C, 32C. Les extrémités 34F, 34G sont pliées dans la même direction, c'est-à-dire que lesdites extrémités sont superposées axialement.

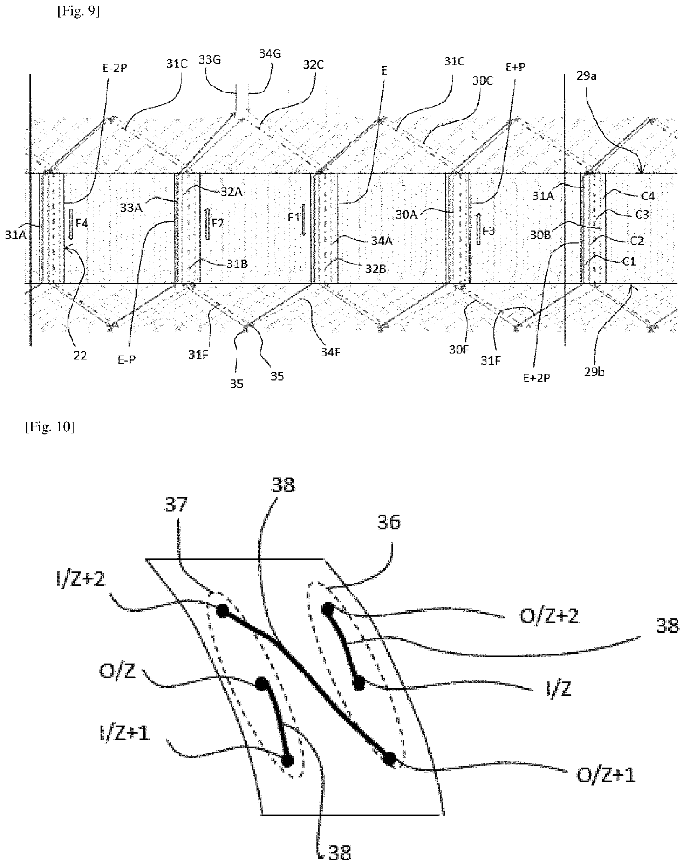

Comme visible sur les figures 2 et 9 notamment, chaque épingle 30, 31, 32, 33, 34 est agencée de manière à ce que d'une part ses segments conducteurs s'étendent dans deux encoches distinctes E et E+P, séparées par un pas P, et que d'autre part chaque jonction coudée soit disposée au niveau de la première face d'extrémité axiale 29a tandis que les extrémités libres sont disposés au niveau de la seconde face d'extrémité axiale 29b et sont reliées entre elles de manière à générer une continuité électrique dans le bobinage d'une épingle à l'autre. Tel que cela va être décrit ci-après notamment en relation avec la figure 9, les extrémités libres de segments conducteurs agencés dans une première couche C1 et les extrémités libres de segments conducteurs agencés dans une deuxième couche C2 sont reliées entre elles et les extrémités libres de segments conducteurs agencés dans une troisième couche C3 et les extrémités libres de segments conducteurs agencés dans une quatrième couche C4 sont reliées entre elles. Ces liaisons sont par exemple faites par soudure. Ainsi, les segments conducteurs 30A, 30B, 31A, 31B, 32A, 32B, 33A, 34A d'une même épingle sont connectés entre eux à une de leurs extrémités par une jonction coudée 30C, 31C, 32C et, chacun, à une autre épingle à leur extrémité libre 30F, 31F, 32F, 33F, 34F.

Le premier groupe d'épingles conductrices 30 forment un groupe dit extérieur, qui comporte les épingles 30 dont les segments conducteurs 30A, 30B sont logés dans les encoches de manière à former la première couche extérieure C1 et la troisième couche centrale interne C3. Le second groupe d'épingles conductrices 31 forment un groupe dit intérieur, qui comporte les épingles 31 dont des segments conducteurs 31A, 31B sont logés dans les encoches de manière à former la quatrième couche intérieure C4 et la deuxième couche centrale externe C2.

Comme visible sur les figures 2 et 9, les deux groupes d'épingle sont imbriqués, c'est-à-dire agencés de manière à ce que l'un des segments conducteurs des épingles 30 du groupe extérieur soit situé dans les encoches plus à l'intérieur que l'un des segments conducteurs des épingles 31 du groupe intérieur. Plus particulièrement, une épingle conductrice 30 appartenant au premier groupe est agencée dans le stator de manière à avoir un segment conducteur 30A occupant une première couche C1 dans une encoche E et un segment conducteur 30B occupant une troisième couche C3 dans une encoche E+P. Similairement, une épingle conductrice 31 appartenant au second groupe est agencée dans le stator de manière à avoir un segment conducteur 31A occupant une deuxième couche C2 dans l'encoche E et un segment conducteur 31B occupant une quatrième couche C4 dans une encoche E+P. Autrement dit, les épingles conductrices 30, 31 sont agencées de sorte que les segments conducteurs d'une même épingle conductrice occupent des encoches distinctes avec un décalage radial de deux couches d'une encoche à l'autre, ou bien en d'autre termes avec l'interposition d'une couche intermédiaire entre les deux couches occupées par les segments conducteurs de cette même épingle. Ce décalage radial correspond à l'interposition d'un segment conducteur appartenant à une épingle conductrice de l'autre groupe. Il résulte de cet agencement particulier un alignement des jonctions coudées au niveau de la première face d'extrémité axiale 29a du corps de stator 21 de sorte que les jonctions coudées adjacentes soient sensiblement parallèles entre elles. Cela permet d'augmenter la compacité du chignon.

Ces deux groupes d'épingles conductrices 30, 31 forment respectivement des chemins électriques continus indépendant l'un de l'autre. Pour assurer la continuité électrique au sein de la phase, une épingle de connexion 32 est agencée pour raccorder électriquement le premier groupe d'épingles conductrice 30 au second groupe d'épingles conductrice 31 et ainsi former un unique chemin électrique et former une phase du bobinage électrique 24. Ainsi, cette épingle de connexion 32 ferme le circuit électrique et permet une circulation appropriée du courant à travers le bobinage, notamment afin que d'une part le courant circule dans le même sens dans chacun des segments conducteurs logés dans une même encoche, et que d'autre part le courant circule de manière générale dans un sens dans une encoche et dans le sens opposé dans les encoches espacées d'un pas P et -P.

Dans l'exemple illustré sur la figure 9, le premier segment conducteur 32A de l'épingle de connexion 32 est disposé dans une des couches associées au premier groupe d'épingles conductrices 30 et le second segment conducteur 32B de ladite épingle est disposé dans une des couches associées au second groupe d'épingles conductrices 31. Cet agencement donne des avantages de connexion électriques du bobinage. En effet, il permet de connecter toutes les épingles conductrices 30, 31 via une épingle de connexion 32 en forme de U, c'est-à-dire de forme similaire à celle des épingles conductrices avec deux segments conducteurs reliés entre eux par une jonction coudée. Avec cet agencement, le bobinage électrique 24 ne comprend donc pas d'épingle spéciale permettant l'inversion du sens du courant afin de respecter le sens de circulation du courant électrique dans les encoches. Ainsi, cela permet de simplifier le bobinage électrique et son procédé d'assemblage.

En particulier dans cet exemple, le premier segment conducteur 32A de l'épingle de connexion 32 est disposé dans la troisième couche C3 et le second segment conducteur 32B de ladite épingle est disposé dans la deuxième couche C2. Ainsi, les segments conducteurs 32A, 32B de l'épingle de connexion sont agencés dans deux couches adjacentes selon une direction radiale de deux encoches différentes, c'est-à-dire qu'il n'y a pas d'interposition d'une couche intermédiaire entre les deux couches occupées par les segments conducteurs de cette même épingle 32. Cela permet à la jonction coudée 32C de l'épingle de connexion d'être intégrée dans le chignon et de ne pas augmenter la hauteur du chignon en passant au-dessus d'une autre portion d'épingle.

Comme visible dans les figures 2, 3 et 9, des épingles d'alimentation 33, 34 sont disposées dans une encoche de manière à ce que leurs segments conducteurs 33A, 34A respectifs soit disposés dans une couche adjacente à la couche de la même encoche comprenant le segment conducteur 32A, 32B d'une épingle de connexion 32. En d'autres termes, pour chaque segment conducteur d'une épingle de connexion 32 occupant une deuxième couche C2 dans une encoche E, on prévoit un segment conducteur 33A d'une épingle d'alimentation 33 pour occuper une première couche C1 dans ladite encoche E. De manière similaire, pour chaque segment conducteur d'une épingle de connexion 32 occupant une troisième couche C3 dans une encoche E+P, on prévoit un segment conducteur 34A d'une épingle d'alimentation 34 pour occuper une quatrième couche C4 dans ladite encoche E+P, espacée d'un pas P par rapport à ladite encoche E. Les épingles d'alimentation 33, 34 sont ainsi disposées dans des couches de bordure de manière à entourer l'épingle de connexion 32 de la même phase dont les segments conducteurs 32A, 32B sont disposées dans des couches centrales.

On comprend qu'à chaque épingle de connexion 32 est associée une paire d'épingles d'alimentation 33, 34 tel que cela est visible sur la figure 2 notamment. Ainsi, un bobinage électrique 24 comprenant six phases comprend également six paires d'épingles d'alimentation 33, dont six premières épingles d'alimentation 33 et six secondes épingles d'alimentation 34, et six épingles de connexion 32. On comprendra que le nombre d'épingles conductrices 30, 31 dépend du nombre d'encoches du stator et donc de l'application de la machine électrique tournante souhaitée, en particulier des performances souhaitées et de l'encombrement disponible, sachant qu'il y a autant d'épingles conductrices 30 du premier groupe que dépingles conductrices 31 du second groupe.

Les extrémités d'alimentation 33G, 34G forment des entrées et/ou des sorties de courant de la phase correspondante. Plus précisément pour une phase, une extrémité 33G, 34G d'une des épingles d'alimentation est connectée, directement ou par l'intermédiaire d'un dispositif d'interconnexion, à une extrémité 33G, 34G d'une épingle d'alimentation d'une autre phase du bobinage. En particulier ici, la sortie d'une phase est connectée à l'entrée d'une autre phase du même système de phase afin de former un couplage de type triangle. Chacune de ces connexions entre les entrées et les sorties de phase est également reliée à une source de courant comprise notamment dans un module électronique de puissance et/ou de commande de l'ensemble électronique 26.

Les extrémités d'alimentation 33G, 34G sont agencées le long du bobinage électrique 24 de manière à être regroupée en un premier ensemble 36 et un second ensemble 37 pour chaque système de phase. Dans cet exemple, les extrémités d'alimentation d'un même ensemble sont disposées dans une même couche Ci de l'encoche. Par exemple ici, comme illustré sur la figure 2 ou les figures 10, le premier ensemble 36 comprend des épingles d'alimentation disposées dans la couche externe C1 et le second ensemble comprend des épingles d'alimentation disposées dans la couche interne C4. Dans une alternative de réalisation, il est possible d'avoir les épingles d'alimentation du premier ensemble disposée dans la couche interne C4 et les épingles d'alimentation du second ensemble disposée dans la couche externe C1. Il est également possible de disposer les épingles d'alimentation dans les couches centrales C2, C3.

Dans l'exemple décrit ici, le bobinage électrique 24 comprend deux systèmes comprenant chacun trois phases. Ainsi, le bobinage comprend ici deux premier ensembles 36 et deux second ensembles 37 comprenant chacun trois extrémités d'alimentation 33G, 34G. Les structures des ensembles peuvent être identiques ou différentes d'un système de phase à l'autre. Chacun des ensembles 36, 37 comprend au moins une extrémité d'alimentation formant une entrée de phase et une extrémité d'alimentation formant une sortie de phase. En particulier dans cet exemple, chaque ensemble 36, 37 comprend soit deux extrémités d'alimentation formant des entrées de phase et une extrémité d'alimentation formant une sortie de phase soit deux extrémités d'alimentation formant des sorties de phase et une extrémité d'alimentation formant une entrée de phase. Les ensembles d'un même système de phase présentent des architectures complémentaires entre elles. Par exemple, si le premier ensemble comprend deux extrémités d'alimentation formant des entrées de phase et une extrémité d'alimentation formant une sortie de phase alors le second ensemble comprend deux extrémités d'alimentation formant des sorties de phase et une extrémité d'alimentation formant une entrée de phase. De plus, chaque ensemble comprend une extrémité d'alimentation par phase dudit système de phase. Ainsi, pour un même ensemble, chaque extrémité d'alimentation appartient à une phase différente.

Les figures 10 représentent, chacune, un mode de réalisation où est illustrée une partie du bobinage du stator et en particulier une vue schématique de dessus, dans une direction axiale, d'une portion du chignon à partir duquel s'étendent les extrémités d'alimentation 33G, 34G. Sur ces exemples, le premier ensemble 36 comprend deux extrémités d'alimentation formant des sorties de phase et une extrémité d'alimentation formant une entrée de phase et le second ensemble 37 comprend deux extrémités d'alimentation formant des entrées de phase et une extrémité d'alimentation formant une sortie de phase. Les extrémités d'alimentation sont agencées sur la même couche de l'encoche et s'étendent donc sur une portion de circonférence du bobinage.

Dans cet exemple de réalisation, au sein d'un même ensemble, les extrémités formant les sortie/entrée de phase sont alternées, dans une direction circonférentielle. C'est-à-dire que pour un ensemble comprenant deux sorties de phase et une entrée de phase, ladite entrée de phase est disposée circonférentiellement entre les sorties de phase. De manière similaire, pour un ensemble comprenant deux entrées de phase et une sortie de phase, ladite sortie de phase est disposée circonférentiellement entre les entrées de phase.

De préférence, la distance, dans une direction circonférentielle, entre les extrémités d'alimentation est identique au sein d'un même ensemble 36, 37.

Par exemple, un même ensemble comprend uniquement des premières épingles d'alimentation 33 ou uniquement des secondes épingles d'alimentation 34. Ainsi, la forme des épingles d'alimentation formant le même ensemble est identique mais lesdites épingles d'alimentation forment, chacune soit une entrée de phase soit une sortie de phase. Par exemple ici, comme illustré sur les figures 2 et 9, le second ensemble 37 comprend des secondes épingles d'alimentation 34 agencées sur la couche interne C4 et le premier ensemble 36 comprend des premières épingles d'alimentation 33 agencées sur la couche externe C1.

Dans cet exemple, une encoche comprend des segments conducteurs de différentes épingles appartenant à une même phase. Toujours dans cet exemple, les extrémités d'alimentation 33G, 34G d'une même phase sont agencées de manière à ce que leur segment conducteur associé 33A, 34A soit disposés dans la même encoche. Lesdites extrémités d'alimentation 33G, 34G d'une même phase sont alors alignées radialement. Ainsi, pour une phase, si le premier ensemble comprend l'extrémité d'alimentation formant la sortie de phase alors le second ensemble comprend l'extrémité d'alimentation formant l'entrée de phase.

La figure 10 illustre un premier exemple dans lequel le premier ensemble 36 comprend dans l'ordre suivant : l'extrémité d'alimentation formant la sortie de la troisième phase O/Z+2, puis l'extrémité d'alimentation formant l'entrée de la première phase I/Z, puis l'extrémité d'alimentation formant la sortie de la deuxième phase O/Z+1. Le second ensemble 37, complémentaire audit premier ensemble 36, comprend alors dans l'ordre suivant : l'extrémité d'alimentation formant l'entrée de la troisième phase I/Z+2, puis l'extrémité d'alimentation formant la sortie de la première phase O/Z, puis l'extrémité d'alimentation formant l'entrée de la deuxième phase I/Z+1.

Pour former le couplage triangle, les extrémités d'alimentation 33G, 34G sont reliées entre elles par exemple ici au moyen de trace d'interconnexion 38. Chaque trace d'interconnexion est par exemple soudée aux extrémités d'alimentation associée et peut comporter une portion de connexion avec un module de l'ensemble électronique 26. Les traces 38 sont pas exemples surmoulées dans une matière isolante électriquement pour faciliter la réalisation de ces connexions et pour garantir une bonne isolation électrique entre elles et entre lesdites traces et les sommets 30E, 31E, 32E des autres épingles du bobinage.

Plus particulièrement, l'extrémité d'alimentation formant l'entrée de phase de la troisième phase I/Z+2 est reliée à l'extrémité d'alimentation formant la sortie de phase de la deuxième phase O/Z+1, l'extrémité d'alimentation formant la sortie de phase de la première phase O/Z est reliée à l'extrémité d'alimentation formant l'entrée de phase de la deuxième phase I/Z+1 et l'extrémité d'alimentation formant la sortie de phase de la troisième phase O/Z+3 est reliée à l'extrémité d'alimentation formant l'entrée de phase de la première phase I/Z. Comme bien visible sur la figure 10, il est possible de réaliser ces connexions sans chevauchement entre les traces 38.

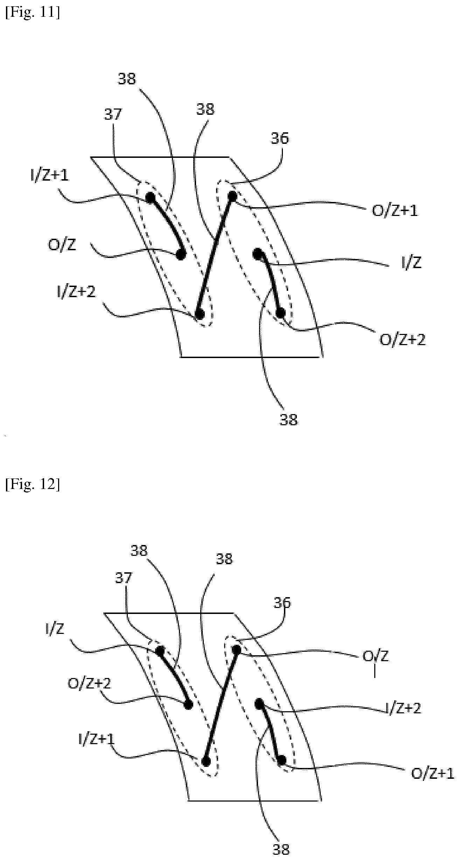

La figure 11 illustre un deuxième exemple dans lequel le premier ensemble 36 comprend dans l'ordre suivant : l'extrémité d'alimentation formant la sortie de la seconde phase O/Z+1, puis l'extrémité d'alimentation formant l'entrée de la première phase I/Z, puis l'extrémité d'alimentation formant la sortie de la troisième phase O/Z+2. Le second ensemble 37, complémentaire audit premier ensemble 36, comprend alors dans l'ordre suivant : l'extrémité d'alimentation formant l'entrée de la seconde phase I/Z+1, puis l'extrémité d'alimentation formant la sortie de la première phase O/Z, puis l'extrémité d'alimentation formant l'entrée de la troisième phase I/Z+2.

Comme expliqué précédemment en référence à la figure 10, le couplage triangle se fait par exemple au moyen de trace d'interconnexion 38. En particulier ici, l'extrémité d'alimentation formant l'entrée de phase de la deuxième phase I/Z+1 est reliée à l'extrémité d'alimentation formant la sortie de phase de la première phase O/Z, l'extrémité d'alimentation formant la sortie de phase de la deuxième phase O/Z+1 est reliée à l'extrémité d'alimentation formant l'entrée de phase de la troisième phase I/Z+2 et l'extrémité d'alimentation formant la sortie de phase de la troisième phase O/Z+2 est reliée à l'extrémité d'alimentation formant l'entrée de phase de la première phase I/Z. Comme bien visible sur la figure 11, il est possible de réaliser ces connexions sans chevauchement entre les traces 38.

De manière similaire, la figure 12 illustre un troisième exemple dans lequel le premier ensemble 36 comprend dans l'ordre suivant : l'extrémité d'alimentation formant la sortie de la première phase O/Z, puis l'extrémité d'alimentation formant l'entrée de la troisième phase I/Z+2, puis l'extrémité d'alimentation formant la sortie de la deuxième phase O/Z+1. Le second ensemble 37, complémentaire audit premier ensemble 36, comprend alors dans l'ordre suivant : l'extrémité d'alimentation formant l'entrée de la première phase I/Z, puis l'extrémité d'alimentation formant la sortie de la troisième phase O/Z+2, puis l'extrémité d'alimentation formant l'entrée de la deuxième phase I/Z+1.

Comme expliqué précédemment, le couplage triangle se fait par exemple au moyen de trace d'interconnexion 38. En particulier ici, l'extrémité d'alimentation formant l'entrée de phase de la deuxième phase I/Z+1 est reliée à l'extrémité d'alimentation formant la sortie de phase de la première phase O/Z, l'extrémité d'alimentation formant la sortie de phase de la deuxième phase O/Z+1 est reliée à l'extrémité d'alimentation formant l'entrée de phase de la troisième phase I/Z+2 et l'extrémité d'alimentation formant la sortie de phase de la troisième phase O/Z+2 est reliée à l'extrémité d'alimentation formant l'entrée de phase de la première phase I/Z. Comme bien visible sur la figure 12, il est possible de réaliser ces connexions sans chevauchement entre les traces 38.

On a représenté sur la figure 9 une illustration schématique d'une partie de bobinage conformément à ce qui a été décrit précédemment. Pour simplifier la lecture, le nombre d'encoches a été limité, étant entendu que ce qui va suivre pourra être étendu sans difficulté par l'homme du métier pour réaliser le bobinage complet, les autres encoches du stator comportant également des empilements de segments conducteurs. Toujours pour simplifier la lecture, les épingles d'une même phase sont représentées en gras, les épingles des autres phases étant représentées en transparence.

Plus précisément, pour le circuit électrique illustré sur la figure 9, le courant est introduit, dans un premier sens d'orientation, dans le bobinage 24 par l'intermédiaire de l'extrémité d'alimentation 34G d'une première épingle d'alimentation 34 formant l'entrée du courant électrique de la phrase illustrée du côté de la première face d'extrémité axiale 29a. On va décrire plus en détail son parcours via les flèches numérotées Fi pour illustrer le fait que le courant circule, dans des segments conducteurs empilés, dans le même sens pour une encoche donnée, et dans un sens opposé pour une encoche espacées d'un pas P ou -P. Il convient de noter que l'encoche E+P est éloignée de l'encoche E d'un pas P prédéterminé, selon un premier sens d'orientation. Dans le présent exemple d'un bobinage électrique double-triphasé avec une encoche par pôle et par phase, le pas P correspond à l'interposition de cinq encoches entre une encoche E et une encoche E+P.

Le courant circule dans le segment conducteur 34A logé dans une encoche E depuis la première face d'extrémité axiale 29a vers la seconde face d'extrémité axiale 29b (flèche F1). Ce segment conducteur 34A, agencé de manière à former partie de la quatrième couche C4 dans cette encoche E, présente à son extrémité libre 34F, du côté de la seconde face d'extrémité axiale 29b, une forme repliée sur elle-même similaire à celle d'un segment conducteur 30F d'une épingle conductrice30 du premier groupe d'épingles qu'il remplace dans cette couche.

L'extrémité libre 34F de l'épingle d'alimentation est connectée, au niveau de la seconde face d'extrémité axiale 29b du stator, à l'extrémité libre 31F d'une épingle conductrice 31 du second groupe d'épingles dont un des segments conducteurs occupe la troisième couche C3 dans une encoche E-P. Les deux extrémités libres 34F, 31F sont agencées l'une à côté de l'autre notamment dans une direction radiale et sont reliées électriquement au niveau d'un point de contact 35, ce point de contact pouvant être réalisé par soudure, de manière à permettre la circulation d'un courant électrique à travers les segments conducteurs, selon un même sens, dans chaque encoche. Le sens de circulation du courant est représenté par les flèches chevauchant les épingles conductrices. Il en résulte que le courant est amené à circuler, depuis la seconde face d'extrémité axiale 29b vers la première face d'extrémité axiale 29a, via le segment conducteur 31B dans la troisième couche C3 de l'encoche E-P, tel qu'illustré par la flèche F2.

Le segment conducteur 31B, occupant la troisième couche C3 dans l'encoche E-P, forme partie d'une épingle conductrice 31 appartenant au second groupe d'épingles de sorte que ce segment conducteur est prolongé, au niveau de la première face d'extrémité axiale 29a, par l'intermédiaire d'une jonction coudée 31C, en un segment conducteur 31A occupant la première couche C1 dans une encoche E-2P séparée d'un espace P par rapport à l'encoche E-P, dans le sens inverse au premier sens d'orientation. Ainsi, le courant est amené à circuler, depuis la première face d'extrémité axiale 29a vers la seconde face d'extrémité axiale 29b, via le segment conducteur 31A dans la première couche C1 de l'encoche E-2P, tel qu'illustré par la flèche F4.

On comprend que pour une phase donnée, les épingles sont imbriquées successivement sur tout le pourtour du stator, et pour simplifier la lecture de la figure 9, on va reprendre la description qui précède après que le courant ait fait sensiblement le tour du stator, au niveau du trait plein disposé entre les encoches E+P et E+2P sur cette figure 9.

A ce stade, la continuité de bobinage est réalisée en connectant l'extrémité libre 31F du segment conducteur 31A occupant la première couche C1 dans l'encoche E+2P, à l'extrémité libre 30F d'un segment conducteur 30A occupant la deuxième couche C2 dans l'encoche E+P, lesdites extrémités 31F, 30F étant agencées côte à côte dans une direction radiale et reliés électriquement par un point de contact 35 au niveau de la seconde face d'extrémité axiale 29a.

Le courant est alors amené à faire une boucle dans le premier sens d'orientation et à circuler depuis la seconde face d'extrémité axiale 29b vers la première face d'extrémité axiale 29a, dans la deuxième couche C2 de l'encoche E+P via le segment conducteur 30A d'une épingle conductrice 30 du premier groupe d'épingles, tel qu'illustré par la flèche F3, puis à circuler dans la jonction coudée 30C de ladite épingle conductrice 30 puis à circuler depuis la première face d'extrémité axiale 29a vers la deuxième face d'extrémité axiale 29b, dans la quatrième couche C4 de l'encoche E+2P via le segment conducteur 30B de ladite épingle conductrice 30. On constate de ce qui précède que dans l'encoche E+2P, les courants circulant dans la première couche C1 et dans la quatrième couche C4 circulent tous deux dans le même sens.

La courant circule alors successivement dans une direction opposée au premier sens d'orientation, via un point de contact 35, à un segment conducteur 31B logé dans la troisième couche C3 de l'encoche E+P puis via la jonction coudée 31C à un segment conducteur 31A de la même épingle conductrice 31 dans la première couche C1 de l'encoche E.

A ce stade, le courant est amené à circuler suite à un point de contact 35, depuis la seconde face d'extrémité axiale 29b vers la première face d'extrémité axiale 29a dans le premier sens d'orientation, dans la deuxième couche C2 de l'encoche E via un segment conducteur 32A de l'épingle de connexion 32 puis, suite à la jonction coudée 32C, depuis la première face d'extrémité axiale 29a vers la seconde face d'extrémité axiale 29b, dans la troisième couche C3 de l'encoche E+P via un segment conducteur 32B de ladite épingle de connexion 32.

La continuité du bobinage est alors réalisée, conformément à ce qui vient d'être décrit, en passant d'un segment conducteur de la première couche C1 à la troisième couche C3 et de la quatrième couche C4 à la deuxième couche C2 du côté des jonctions coudées formant partie des épingles conductrices, et en passant de la deuxième couche C2 à la première couche C1 et de la troisième couche C3 à la quatrième couche C4 par des points de contacts 35, notamment des soudures, au niveau de la seconde face d'extrémité axiale 29b, de sorte que la circulation du courant dans un même sens dans chaque encoche est réalisée.

Le courant est alors amené à circuler conformément à ce qui a été décrit précédemment, d'une épingle conductrice à l'autre, jusqu'à circuler dans l'encoche E-P au niveau de la première couche C1 dans laquelle est agencée le segment conducteur 33A de l'épingle d'alimentation 33 formant via son extrémité d'alimentation 33G la sortie de courant de la phase illustrée.

La présente invention trouve des applications en particulier dans le domaine des alternateurs, des alterno-démarreurs, des moteurs électriques ou encore des machines réversibles mais elle pourrait également s'appliquer à tout type de machine tournante.

Bien entendu, la description qui précède a été donnée à titre d'exemple uniquement et ne limite pas le domaine de la présente invention qui est définie par les revendications ci-jointes.

## Revendications

1. Bobinage électrique pour une partie active, formée notamment d'un stator ou d'un rotor, de machine électrique tournante (10), la partie active comportant un corps (21) présentant une culasse (27) annulaire autour d'un axe (X) et une pluralité de dents (28) s'étendant à partir d'une face latérale de la culasse dans une direction radiale de manière à délimiter des encoches (22), lesdites encoches étant ouvertes sur une première face d'extrémité axiale (29a) et sur une seconde face d'extrémité axiale (29b) du corps ; le bobinage électrique (24) présentant au moins un système de phases comprenant plusieurs phases électriques chacune comportant un ensemble d'épingles (30, 31, 32, 33, 34) étant reliées électriquement entre elles et présentant chacune au moins un segment conducteur (30A, 30B, 31A, 31B, 32A, 32B, 33A, 34A), lesdits segments conducteurs destinés à être logés dans une même encoche forment N couches (Ci), ledit ensemble d'épingles comporte une première épingle d'alimentation (33) et une seconde épingle d'alimentation (34) formant chacune une entrée ou une sortie de phase, chaque épingle d'alimentation comporte une extrémité d'alimentation (33G, 34G) s'étendant à partir du segment conducteur associé (33A, 34A) à l'extérieur de l'encoche et chaque extrémité d'alimentation (33G, 34G) qui forme une sortie de phase est reliée électriquement à une autre extrémité d'alimentation (33G, 34G) qui forme une entrée de phase d'une phase différente pour former un couplage triangle, le bobinage comprenant un premier ensemble (36), formé d'épingles d'alimentation de différentes phases disposées dans une première couche parmi les N couches (Ci), avec au moins une extrémité d'alimentation (33G, 34G) formant une entrée de phase et au moins une autre extrémité d'alimentation (33G, 34G) formant une sortie de phase et comprenant un second ensemble (37), formé d'épingles d'alimentation de différentes phases disposées dans une deuxième couche parmi les N couches (Ci) différente de ladite première couche, comprenant au moins une extrémité d'alimentation (33G, 34G) formant une entrée de phase et au moins une autre extrémité d'alimentation (33G, 34G) formant une sortie de phase **caractérisé en ce que**, pour une même phase, chaque épingle d'alimentation (33, 34) du premier ensemble (36) est agencée dans une même encoche (22) qu'une épingle d'alimentation (33, 34) du second ensemble (37).

2. Bobinage électrique selon l'une des revendications précédentes, **caractérisé en ce que** dans un ensemble (36, 37) comprenant au moins trois premières extrémités (33G, 34G), les entrées/sorties de phase sont alternées suivant la circonférence du bobinage.

3. Bobinage électrique selon la revendication précédente, **caractérisé en ce que** pour un système de phase comportant un nombre Z de phases électriques, Z étant un nombre entier supérieur ou égal à 3, les épingles d'alimentation (33, 34) sont disposées, le long de la circonférence du stator, dans l'ordre suivant :
a. pour le premier ensemble (36) : l'extrémité d'alimentation formant la sortie de la troisième phase (O/Z+2), puis l'extrémité d'alimentation formant l'entrée de la première phase (I/Z), puis l'extrémité d'alimentation formant la sortie de la deuxième phase (O/Z+1) et pour le second ensemble (37) : l'extrémité d'alimentation formant l'entrée de la troisième phase (I/Z+2), puis l'extrémité d'alimentation formant la sortie de la première phase (O/Z), puis l'extrémité d'alimentation formant l'entrée de la deuxième phase (I/Z+1) ; ou
b. pour le premier ensemble (36) : l'extrémité d'alimentation formant la sortie de la seconde phase (O/Z+1), puis l'extrémité d'alimentation formant l'entrée de la première phase (I/Z), puis l'extrémité d'alimentation formant la sortie de la troisième phase (O/Z+2) et pour le second ensemble (37) : l'extrémité d'alimentation formant l'entrée de la seconde phase (I/Z+1), puis l'extrémité d'alimentation formant la sortie de la première phase (O/Z), puis l'extrémité d'alimentation formant l'entrée de la troisième phase (I/Z+2) ; ou
c. pour le premier ensemble (36) : l'extrémité d'alimentation formant la sortie de la première phase (O/Z), puis l'extrémité d'alimentation formant l'entrée de la troisième phase (I/Z+2), puis l'extrémité d'alimentation formant la sortie de la deuxième phase (O/Z+1) et pour le second ensemble (37) : l'extrémité d'alimentation formant l'entrée de la première phase (I/Z), puis l'extrémité d'alimentation formant la sortie de la troisième phase (O/Z+2), puis l'extrémité d'alimentation formant l'entrée de la deuxième phase (I/Z+1).

4. Bobinage électrique selon l'une des revendications précédentes, **caractérisé en ce que** les épingles d'alimentation (33, 34) sont disposées dans des couches de bordure.

5. Bobinage électrique selon l'une des revendications précédentes, **caractérisé en ce que**, pour un même système de phase, les épingles d'alimentation (33, 34) du premier ensemble (36) présentent une forme différente de celle des épingles d'alimentation du second ensemble (37).

6. Bobinage électrique selon l'une des revendications précédentes, **caractérisé en ce que** les épingles (30, 31, 32) autres que les épingles d'alimentation (33, 34) sont chacune formée de deux segments conducteurs reliés entre eux à une de leur extrémité s'étendant à partir de la première face d'extrémité axiale (29a) du corps (21), dite première extrémité, et reliés à différentes épingles à l'autre de leur extrémité s'étendant à partir de la seconde face d'extrémité axiale (29b) du corps, dite seconde extrémité, les premières extrémités (33G, 34G) des épingles d'alimentation s'étendant à partir de ladite première face d'extrémité axiale (29a).

7. Bobinage électrique selon l'une des revendications précédentes, **caractérisé en ce que** le bobinage comporte un premier groupe d'épingles conductrices (30) dont les segments conducteurs (30A, 30B) sont, chacun, disposés dans deux couches distinctes et séparées l'une de l'autre par au moins une couche intercalaire, un second groupe d'épingles conductrices (31) dont les segments conducteurs (31A, 31B) sont, chacun, disposés dans deux couches distinctes et séparées l'une de l'autre par au moins une couche intercalaire, les couches comportant le premier groupe d'épingles étant distinctes des couches comportant le second groupe d'épingles et une épingle de connexion (32) permettant de relier le premier groupe d'épingles au second groupe d'épingles.

8. Bobinage électrique selon l'une des revendications précédentes, **caractérisé en ce que** chaque ensemble (36, 37) comprend une extrémité d'alimentation (33G, 34G) par phase du système de phases.

9. Machine électrique tournante comprenant une partie active, formée notamment d'un stator ou d'un rotor, qui comporte un bobinage électrique (24) selon l'une quelconque des revendications précédentes.

## Patentansprüche

1. Elektrische Wicklung für einen aktiven Teil, insbesondere bestehend aus einem Stator oder einem Rotor, einer rotierenden elektrischen Maschine (10), wobei der aktive Teil einen Körper (21) mit einem ringförmigen Joch (27) um eine Achse (X) und einer Vielzahl von Zähnen (28) umfasst, die sich von einer Seitenfläche des Jochs in radialer Richtung erstrecken, um Schlitze (22) zu begrenzen, wobei die Schlitze an einer ersten axialen Endfläche (29a) und an einer zweiten axialen Endfläche (29b) des Körpers offen sind; wobei die elektrische Wicklung (24) mindestens ein Phasensystem aufweist, das mehrere elektrische Phasen umfasst, die jeweils einen Satz von Haarnadeln (30, 31, 32, 33, 34) umfassen, die elektrisch miteinander verbunden sind und jeweils mindestens ein leitfähiges Segment (30A, 30B, 31A, 31B, 32A, 32B, 33A, 34A) aufweist, wobei die leitfähigen Segmente, die in demselben Schlitz untergebracht werden sollen, N Schichten (Ci) bilden, wobei der Satz von Haarnadeln eine erste Stromversorgungs-Haarnadel (33) und eine zweite Stromversorgungs-Haarnadel (34) umfasst, die jeweils einen Phaseneingang oder -ausgang bilden, wobei jede Stromversorgungs-Haarnadel ein Stromversorgungsende (33G, 34G) umfasst, das sich von dem zugehörigen leitfähigen Segment (33A, 34A) außerhalb des Steckplatzes erstreckt, und jedes Stromversorgungsende (33G, 34G), das einen Phasenausgang bildet, elektrisch mit einem anderen Stromversorgungsende (33G, 34G) verbunden ist, das einen Phaseneingang einer anderen Phase bildet, um eine Dreieckskopplung zu bilden, wobei die Wicklung einen ersten Satz (36) umfasst, der aus Stromversorgungs-Haarnadeln unterschiedlicher Phasen gebildet ist, die in einer ersten Schicht unter den N Schichten (Ci) angeordnet sind, wobei mindestens ein Stromversorgungsende (33G, 34G) einen Phaseneingang bildet und mindestens ein anderes Stromversorgungsende (33G, 34G) einen Phasenausgang bildet, und eine zweite Gruppe (37) umfasst, die aus Stromversorgungs-Hairpins unterschiedlicher Phasen gebildet ist, die in einer zweiten Schicht unter den N Schichten (Ci) angeordnet sind, die sich von der ersten Schicht unterscheidet, und mindestens ein Stromversorgungsende (33G, 34G), das einen Phaseneingang bildet, und mindestens ein weiteres Stromversorgungsende (33G, 34G) umfasst, das einen Phasenausgang bildet, **dadurch gekennzeichnet, dass** für dieselbe Phase jede Stromversorgungs-Haarspange (33, 34) des ersten Satzes (36) in demselben Steckplatz (22) angeordnet ist wie eine Stromversorgungs-Haarspange (33, 34) des zweiten Satzes (37) angeordnet ist.

2. Elektrische Wicklung nach einem der vorstehenden Ansprüche, **dadurch gekennzeichnet, dass** in einem Satz (36, 37) mit mindestens drei ersten Enden (33G, 34G) die Phaseneingänge/- ausgänge entlang des Umfangs der Wicklung abwechselnd angeordnet sind.

3. Elektrische Wicklung nach dem vorstehenden Anspruch, **dadurch gekennzeichnet, dass** bei einem Phasensystem mit einer Anzahl Z von elektrischen Phasen, wobei Z eine ganze Zahl größer oder gleich 3 ist, die Stromversorgungs-Haarspangen (33, 34) entlang des Umfangs des Stators in der folgenden Reihenfolge angeordnet sind:
a. für den ersten Satz (36): das Stromversorgungsende, das den Ausgang der dritten Phase (O/Z+2) bildet, dann das Stromversorgungsende, das den Eingang der ersten Phase (I/Z) bildet, dann das Stromversorgungsende, das den Ausgang der zweiten Phase (O/Z+1) bildet und für den zweiten Satz (37): das die Eingangsseite der dritten Phase (I/Z+2) bildende Versorgungsende, dann das die Ausgangsseite der ersten Phase (O/Z) bildende Versorgungsende, dann das die Eingangsseite der zweiten Phase (I/Z+1) bildende Versorgungsende; oder
b. für den ersten Satz (36): das Stromversorgungsende, das den Ausgang der zweiten Phase (O/Z+1) bildet, dann das Stromversorgungsende, das den Eingang der ersten Phase (I/Z) bildet, dann das Stromversorgungsende, das den Ausgang der dritten Phase (O/Z+2) bildet, und für den zweiten Satz (37): das Stromversorgungsende , das den Eingang der zweiten Phase (I/Z+1) bildet, dann das Stromversorgungsende, das den Ausgang der ersten Phase (O/Z) bildet, dann das Stromversorgungsende, das den Eingang der dritten Phase (I/Z+2) bildet; oder
c. für den ersten Satz (36): das Stromversorgungsende, das den Ausgang der ersten Phase (O/Z) bildet, dann das Stromversorgungsende, das den Eingang der dritten Phase (I/Z+2) bildet, dann das Stromversorgungsende, das den Ausgang der zweiten Phase (O/Z+1) bildet, und für den zweiten Satz (37): das Stromversorgungsende, das den Eingang der ersten Phase (I/Z) bildet, dann das Stromversorgungsende, das den Ausgang der dritten Phase (O/Z+2) bildet, dann das Stromversorgungsende, das den Eingang der zweiten Phase (I/Z+1) bildet.

4. Elektrische Wicklung nach einem der vorstehenden Ansprüche, **dadurch gekennzeichnet, dass** die Stromversorgungs-Hairpins (33, 34) in Randschichten angeordnet sind.

5. Elektrische Wicklung nach einem der vorstehenden Ansprüche, **dadurch gekennzeichnet, dass** für dasselbe Phasensystem die Stromversorgungs-Hairpins (33, 34) des ersten Satzes (36) eine andere Form haben als die Stromversorgungs-Hairpins des zweiten Satzes (37).

6. Elektrische Wicklung nach einem der vorstehenden Ansprüche, **dadurch gekennzeichnet, dass** die anderen Haarnadeln (30, 31, 32) als die Stromversorgungs-Haarnadeln (33, 34) jeweils aus zwei leitfähigen Segmenten gebildet sind, die an einem ihrer Enden, das sich von der ersten axialen Endfläche (29a) des Körpers (21), das als erstes Ende bezeichnet wird, und an ihren anderen Enden, die sich von der zweiten axialen Endfläche (29b) des Körpers, die als zweites Ende bezeichnet wird, erstrecken, mit verschiedenen Haarnadeln verbunden sind, wobei sich die ersten Enden (33G, 34G) der Stromversorgungs-Haarnadeln von der ersten axialen Endfläche (29a) erstrecken.

7. Elektrische Wicklung nach einem der vorstehenden Ansprüche, **dadurch gekennzeichnet, dass** die Wicklung eine erste Gruppe von leitfähigen Haarnadeln (30) umfasst, deren leitfähige Segmente (30A, 30B) jeweils in zwei unterschiedlichen Schichten angeordnet sind, die durch mindestens eine Zwischenschicht voneinander getrennt sind, sowie eine zweite Gruppe von leitfähigen Haarnadeln (31), deren leitfähige Segmente (31A, 31B) jeweils in zwei unterschiedlichen Schichten angeordnet sind, die durch mindestens eine Zwischenschicht voneinander getrennt sind, wobei die Schichten, die die erste Gruppe von Haarnadeln umfassen, sich von den Schichten unterscheiden, die die zweite Gruppe von Haarnadeln umfassen, und eine Verbindungshaarnadel (32), die es ermöglicht, die erste Gruppe von Haarnadeln mit der zweiten Gruppe von Haarnadeln zu verbinden.

8. Elektrische Wicklung nach einem der vorstehenden Ansprüche, **dadurch gekennzeichnet, dass** jeder Satz (36, 37) ein Stromversorgungsende (33G, 34G) pro Phase des Phasensystems umfasst.

9. Rotierende elektrische Maschine mit einem aktiven Teil, der insbesondere aus einem Stator oder einem Rotor besteht, der eine elektrische Wicklung (24) gemäß einem der vorstehenden Ansprüche umfasst.

## Claims

1. Electric winding for an active part, formed in particular of a stator or a rotor, of a rotating electrical machine (10), the active part comprising a body (21) having an annular yoke (27) around an axis (X) and a plurality of teeth (28) extending from a lateral face of the yoke in a radial direction so as to delimit slots (22), said slots being open on a first axial end face (29a) and on a second axial end face (29b) of the body; the electric winding (24) having at least one phase system comprising several electrical phases each including a set of hairpins (30, 31, 32, 33, 34) being electrically connected to each other and each having at least one conductive segment (30A, 30B, 31A, 31B, 32A, 32B, 33A, 34A), said conductive segments intended to be housed in the same slot form N layers (Ci), said set of hairpins includes a first power supply hairpin (33) and a second power supply hairpin (34) each forming a phase input or output, each power supply hairpin includes a power supply end (33G, 34G) extending from the associated conductive segment (33A, 34A) outside the slot and each power supply end (33G, 34G) that forms a phase output is electrically connected to another power supply end (33G, 34G) that forms a phase input of a different phase to form a delta coupling, the winding comprising a first set (36), formed of power supply hairpins of different phases arranged in a first layer among the N layers (Ci), with at least one power supply end (33G, 34G) forming a phase input and at least one other power supply end (33G, 34G) forming a phase output and comprising a second set (37), formed of power supply hairpins of different phases arranged in a second layer among the N layers (Ci) different from said first layer, comprising at least one power supply end (33G, 34G) forming a phase input and at least one other power supply end (33G, 34G) forming a phase output **characterized in that**, for the same phase, each power supply hairpin (33, 34) of the first set (36) is arranged in the same slot (22) as a power supply hairpin (33, 34) of the second set (37).

2. Electric winding according to one of the preceding claims, **characterized in that** in a set (36, 37) comprising at least three first ends (33G, 34G), the phase inputs/outputs are alternated along the circumference of the winding.

3. Electric winding according to the preceding claim, **characterized in that** for a phase system comprising a number Z of electrical phases, Z being an integer greater than or equal to 3, the power supply hairpins (33, 34) are arranged, along the circumference of the stator, in the following order:
a. for the first set (36): the power supply end forming the output of the third phase (O/Z+2), then the power supply end forming the input of the first phase (I/Z), then the power supply end forming the output of the second phase (O/Z+1) and for the second set (37): the power supply end forming the input of the third phase (I/Z+2), then the power supply end forming the output of the first phase (O/Z), then the power supply end forming the input of the second phase (I/Z+1); or
b. for the first set (36): the power supply end forming the output of the second phase (O/Z+1), then the power supply end forming the input of the first phase (I/Z), then the power supply end forming the output of the third phase (O/Z+2) and for the second set (37): the power supply end forming the input of the second phase (I/Z+1), then the power supply end forming the output of the first phase (O/Z), then the power supply end forming the input of the third phase (I/Z+2); or
c. for the first set (36): the power supply end forming the output of the first phase (O/Z), then the power supply end forming the input of the third phase (I/Z+2), then the power supply end forming the output of the second phase (O/Z+1) and for the second set (37): the power supply end forming the input of the first phase (I/Z), then the power supply end forming the output of the third phase (O/Z+2), then the power supply end forming the input of the second phase (I/Z+1).

4. Electric winding according to one of the preceding claims, **characterized in that** the power supply hairpins (33, 34) are arranged in border layers.

5. Electric winding according to one of the preceding claims, **characterized in that**, for the same phase system, the power supply hairpins (33, 34) of the first set (36) have a different shape from that of the power supply hairpins of the second set (37).

6. Electric winding according to one of the preceding claims, **characterized in that** the hairpins (30, 31, 32) other than the power supply hairpins (33, 34) are each formed of two conductive segments connected to each other at one of their ends extending from the first axial end face (29a) of the body (21), called the first end, and connected to different hairpins at the other of their ends extending from the second axial end face (29b) of the body, called the second end, the first ends (33G, 34G) of the power supply hairpins extending from said first axial end face (29a).

7. Electric winding according to one of the preceding claims, **characterized in that** the winding comprises a first group of conductive hairpins (30) whose conductive segments (30A, 30B) are, each, arranged in two distinct layers separated from each other by at least one intermediate layer, a second group of conductive hairpins (31) whose conductive segments (31A, 31B) are, each, arranged in two distinct layers separated from each other by at least one intermediate layer, the layers comprising the first group of hairpins being distinct from the layers comprising the second group of hairpins and a connection hairpin (32) allowing to connect the first group of hairpins to the second group of hairpins.

8. Electric winding according to one of the preceding claims, **characterized in that** each set (36, 37) comprises one power supply end (33G, 34G) per phase of the phase system.

9. Rotating electrical machine comprising an active part, formed in particular of a stator or a rotor, which comprises an electric winding (24) according to any one of the preceding claims.
